# EUROPEAN PATENT SPECIFICATION

(11) **EP 4 357 873 B1**
(45) Date of publication and mention of the grant of the patent: **15.04.2026**
(21) Application number: 23204671.4
(22) Date of filing: 19.10.2023
(51) Int. Cl.: G05D 1/224, G05D 1/227, G05D 1/661, G05D 1/698, G05D 105/28, G05D 107/70, G05D 109/10

(54) **OPERATION ASSISTANCE FOR AUTONOMOUS MATERIAL HANDLING VEHICLES**
BETRIEBSUNTERSTÜTZUNG FÜR AUTONOME MATERIALHANDHABUNGSFAHRZEUGE
ASSISTANCE AU FONCTIONNEMENT POUR VÉHICULES DE MANIPULATION DE MATÉRIAU AUTONOMES

(30) Priority: 20.10.2022 US 202263417955 P
(43) Date of publication of application: 24.04.2024
(73) Proprietor: The Raymond Corporation, Greene, NY 13778 (US)
(72) Inventor: GONCALVES, Fernando D., Vestal, NY, 13850 (US)
(74) Representative: Zacco Sweden AB

(56) References cited:
- EP-A1- 2 500 871
- US-A1- 2022 281 728
- US-B1- 11 079 753

## Description

### CROSS-REFERENCES TO RELATED APPLICATIONS

This application is based on and claims priority to U.S. Provisional Patent Application No. 63/417,955 filed on October 20, 2022.

### BACKGROUND

Material handling vehicles have been developed to transport goods loaded onto generally standardized transport platforms. For example, forklifts can be used to lift goods loaded onto a pallet and move the goods between locations in a facility such as a warehouse or a factory. Some material handling vehicles, such as automated guided vehicles (AGVs), can operate autonomously without a human operator. Other material handling vehicles are non-autonomous and are operated by a human. In any kind of material handling vehicle, systems and methods for improving operational efficiency are generally desired.

For certain types of vehicles there are training requirements imposed by various government agencies, laws, rules, and regulations. For example, the United States Department of Labor Occupational Safety and Health Administration (OSHA) imposes a duty on employers to train and supervise operators of various types of material handling vehicles. Recertification every three years is also required. In certain instances, refresher training in relevant topics shall be provided to the operator when required. In all instances, the operator remains in control of the material handling vehicle during performance of any actions. Further, a warehouse manager remains in control of the fleet of material handling vehicles within the warehouse environment. The training of operators and supervision to be provided by warehouse managers requires among other things proper operational practices including among other things that an operator remain in control of the material handling vehicle, pay attention to the operating environment, and always look in the direction of travel.

The prior art includes document EP 2 500 871 A1 which discloses a control system that operates an industrial vehicle that includes a propulsion drive system, and a guidance and navigation system operatively connected to the propulsion drive system to control motion of the industrial vehicle along a path in an unmanned, autonomous mode.

The prior art includes document US 2022/0281728 A1 which discloses systems and methods to provide assistance to operation of a material handling vehicle in a training situation.

### BRIEF SUMMARY

The present disclosure relates generally to assisting autonomously operated material handling vehicles operating within a facility.

In one aspect, the present disclosure provides a system including an unmanned material handling vehicle to be operated autonomously in a facility and a manned material handling vehicle to be operated by a human in the facility. The manned material handling vehicle includes circuitry that causes the manned material handling vehicle to receive a request for assistance from the unmanned material handling vehicle directly via a wireless network, notify the human of the request for assistance received from the unmanned material handling vehicle, receive an input from the human responsive to the request for assistance received from the unmanned material handling vehicle, and affect operation of the unmanned material handling vehicle based on the input received from the human.

In another aspect, the present disclosure provides a material handling vehicle including a communications interface for communicating via a wireless network, a user interface for presenting data to a human that operates the material handling vehicle and for receiving inputs from the human that operates the material handling vehicle, and a controller. The controller includes circuitry that causes the controller to receive a request for assistance transmitted from a second material handling vehicle to the material handling vehicle directly via the wireless network, wherein the second material handling vehicle is to be operated autonomously, notify the human of the request for assistance received from the second material handling vehicle via the user interface, receive an input from the human from the human responsive to the request for assistance received from the second material handling vehicle via the user interface, and communicate with the second material handling vehicle via the wireless network to affect operation of the second material handling vehicle in accordance with the input received from the human.

In yet another aspect, the present disclosure provides a method for operating material handling vehicles including determining that an autonomous material handling vehicle needs assistance operating within a facility, transmitting a request for assistance associated with the autonomous material handling vehicle to a non-autonomous material handling vehicle operating within the facility, notifying a human operating the non-autonomous material handling vehicle of the request for assistance associated with the autonomous material handling vehicle, receiving an input from the human operating the non-autonomous material handling vehicle responsive to the request for assistance, and affecting operation of the autonomous material handling vehicle based on the input from the human operating the non-autonomous material handling vehicle.

### BRIEF DESCRIPTION OF DRAWINGS

FIG. 1 is a block diagram illustrating components of an example system for operating material handling vehicles within a facility, according to some aspects of the disclosure.
FIG. 2 is an illustration of an example remote operator station for operating material handling vehicles within a facility, according to some aspects of the disclosure.
FIG. 3 is an illustration of an example manned material handling vehicle that has the ability to assist unmanned material handling vehicles operating within a facility, according to some aspects of the disclosure.
FIG. 4 is an illustration of another example manned material handling vehicle that has the ability to assist unmanned material handling vehicles operating within a facility, according to some aspects of the disclosure
FIG. 5 is a flowchart illustrating an example process for operating material handling vehicles within a facility, according to some aspects of the disclosure.
FIG. 6 is a flowchart illustrating another example process for operating material handling vehicles within a facility, according to some aspects of the disclosure.
FIG. 7 is an illustration of an example remote assist type that can be performed for unmanned material handling vehicles within a facility, according to some aspects of the disclosure.
FIG. 8 is an illustration of an example remote assist type that can be performed for unmanned material handling vehicles within a facility, according to some aspects of the disclosure.

### DETAILED DESCRIPTION

It is also to be appreciated that material handling vehicles are designed in a variety of classes and configurations to perform a variety of tasks. It will be apparent to those of skill in the art that the present disclosure is not limited to any specific material handling vehicle, and can also be provided with various other types of material handling vehicle classes and configurations, including for example, lift trucks, forklift trucks, reach trucks, SWING REACH^{®} vehicles, turret trucks, side loader trucks, counterbalanced lift trucks, pallet stacker trucks, order pickers, transtackers, and man-up trucks, and can be commonly found in warehouses, factories, shipping yards, and, generally, wherever pallets, large packages, or loads of goods can be required to be transported from place to place. The various systems and methods disclosed herein are suitable for any of operator controlled, pedestrian controlled, remotely controlled, and autonomously controlled material handling vehicles.

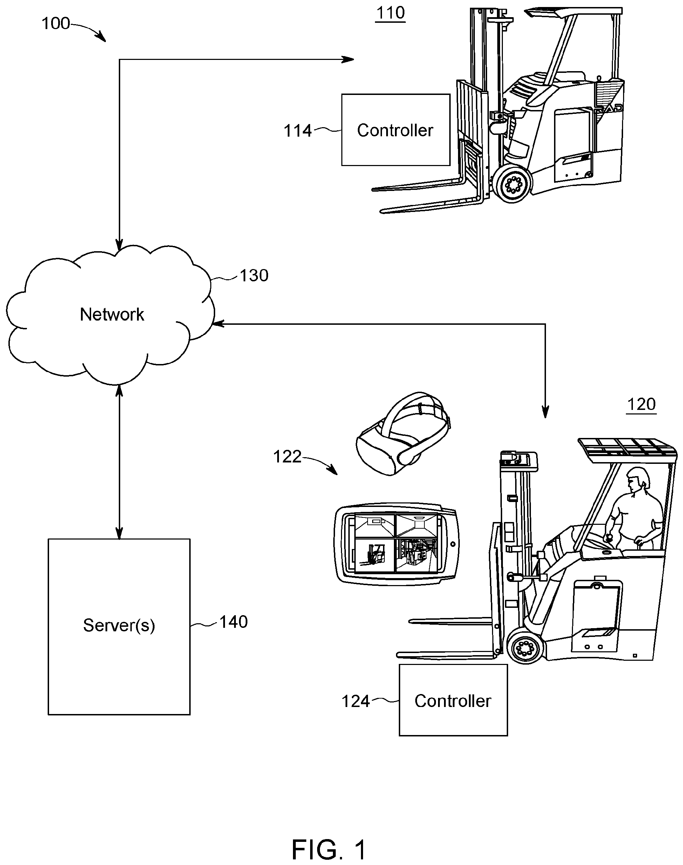

Referring to FIG. 1, an example system 100 for operating material handling vehicles within a facility is shown. System 100 is shown to include an unmanned material handling vehicle 110 that can operate autonomously within a facility. The facility can be a warehouse, a factory, or another type of facility where material handling vehicles and material handling equipment more generally can be used to perform tasks involving moving, storing, controlling, and protecting materials, goods, and products throughout processes such as manufacturing, distribution, consumption, and disposal, as non-limiting examples. System 100 is also shown to include a manned material handling vehicle 120 that can operate within the facility based on the control of a human operator. System 100 is also shown to include a network 130 that is communicatively connected to unmanned material handling vehicle 110, manned material handling vehicle 120, and a server 140. System 100 can generally be used to assist unmanned material handling vehicle 110 with operation within the facility in scenarios where unmanned material handling vehicle 110 needs assistance with navigation or other aspects of operation.

Unmanned material handling vehicle 110 can generally be implemented using any suitable type of material handling vehicle that can operate autonomously within the facility. For example, unmanned material handling vehicle 110 can be implemented as an autonomous or semi-autonomous lift truck, forklift truck, reach truck, turret truck, side loader truck, counterbalanced lift truck, pallet stacker truck, order picker, transtacker, dock truck, man-up truck, and other types of material handling vehicles. Unmanned material handling vehicle 110 can be powered using a variety of different types of batteries and can include various types of mechanical and electrical components. Unmanned material handling vehicle 110 can also include an obstacle detection system for providing obstacle avoidance functionality for unmanned material handling vehicle 110 and for helping satisfy a variety of different requirements and regulations that may apply to the environment in which unmanned material handling vehicle 110 operates.

Unmanned material handling vehicle 110 can include a controller 114 with circuitry for controlling the operation of unmanned material handling vehicle 110. Controller 114 can be integral with and/or removable from unmanned material handling vehicle 110, and can be implemented using different types of hardware and software configurations, including use of multiple separate hardware components and/or devices and multiple separate software and/or firmware packages. For example, various types of processing circuitry (e.g., central processing units (CPUs), etc.) and memory (e.g., volatile, non-volatile, etc.) can be used to implement controller 114 of unmanned material handling vehicle 110. Unmanned material handling vehicle 110 can also include various sensors such as lidar sensors, cameras, proximity sensors, vibration sensors, temperature sensors, pressure sensors, location sensors, weight sensors, and other suitable types of sensors.

Controller 114 of unmanned material handling vehicle 110 can communicate with various components of unmanned material handling vehicle 110 including sensors and actuators via a controller area network (CAN) bus and/or via Ethernet, for example. Controller 114 of unmanned material handling vehicle 110 can also include a communications interface for communicating via network 130. The communications interface can include a wireless interface such as a wireless radio used to communicate via Bluetooth^{®}, WiFi^{®}, cellular, and/or other wireless network protocols (e.g., through one or more gateways, wireless access points, etc.). The communications interface can also include different types of communications ports (e.g., USB, Ethernet, cellular, coaxial, fiber optic, etc.) for establishing connections to different networks and/or devices. Controller 114 can include one or more non-transitory computer-readable storage media having instructions stored thereon that, when executed by one or more processors of controller 114, cause controller 114 to implement operations according to the instructions. Unmanned material handling vehicle 110 can transmit a variety of reporting data including historical data and location data via network 130 to server 140 for various purposes.

Unmanned material handling vehicle 110 can transmit a request for assistance when it encounters difficulties operating within the facility. A variety of different types of navigational and operational difficulties, including difficulties identifying and locating various items within the facility, can arise depending on the application. For example, the pallet detection system on unmanned material handling vehicle 110 may have difficulty identifying a pallet in a warehouse and/or unmanned material handling vehicle 110 may have difficulty identifying the pallet pockets on a pallet in the warehouse. As a result, unmanned material handling vehicle 110 can send a request for assistance to manned material handling vehicle 120 such that the operator of manned material handling vehicle 120 can assist unmanned material handling vehicle 110 in identifying the pallet or pallet pockets. As another example, unmanned material handling vehicle 110 can determine that a target destination for a pallet it is carrying is already occupied by another pallet and, as a result, can send a request for assistance to manned material handling vehicle 120 such that the operator of manned material handling vehicle 120 can assist unmanned material handling vehicle 110 in identifying a suitable alternate location. Unmanned material handling vehicle 110 can also seek help with identifying a target pallet of goods, determining that a target pallet of goods is empty, and other types of situations that may arise during material handling operations. For example, if unmanned material handling vehicle 110 is asked to retrieve a pallet from a location (e.g., location A12) but, when unmanned material handling vehicle 110 arrives at the location, it does not find a pallet, it can then transmit a request for assistance regarding what it should do next. In some examples, a remote system such as a location system executing on server 140 may identify that unmanned material handling vehicle 110 needs assistance and may instruct unmanned material handling vehicle 110 to transmit a request for assistance to manned material handling vehicle 120. In this sense, unmanned material handling vehicle 110 can either directly or indirectly determine that it needs assistance before transmitting a request for assistance to manned material handling vehicle 120.

Manned material handling vehicle 120 can also generally be implemented using any suitable type of material handling vehicle that can be operated by a human within the facility. For example, manned material handling vehicle 120 can be implemented as a lift truck, forklift truck, reach truck, turret truck, side loader truck, counterbalanced lift truck, pallet stacker truck, order picker, transtacker, dock truck, man-up truck, and other types of material handling vehicles. Manned material handling vehicle 120 can be powered using a variety of different types of batteries and can include various types of mechanical and electrical components. Manned material handling vehicle 120 can also include an obstacle detection system for providing obstacle detection functionality for manned material handling vehicle 120 and/or a proximity detection system to provide indications of other nearby vehicles and objects, and for helping satisfy a variety of different requirements and regulations that may apply to the environment in which unmanned material handling vehicle 110 operates. A human can generally operate manned material handling vehicle 120 to perform operations such as accelerating, braking, steering, raising, lifting, and the like.

Manned material handling vehicle 120 can also include a controller 124 with circuitry for controlling the operation of manned material handling vehicle 120. Controller 124 can be integral with and/or removable from manned material handling vehicle 120, and can be implemented using different types of hardware and software configurations, including use of multiple separate hardware components and/or devices and multiple separate software and/or firmware packages. For example, various types of processing circuitry (e.g., CPUs, etc.) and memory (e.g., volatile, non-volatile, etc.) can be used to implement controller 124 of manned material handling vehicle 120. Manned material handling vehicle 120 can also include various sensors such as lidar sensors, cameras, proximity sensors, vibration sensors, temperature sensors, pressure sensors, location sensors, weight sensors, and other suitable types of sensors.

Controller 124 of manned material handling vehicle 120 can communicate with various components of manned material handling vehicle 120 including sensors and actuators via a CAN bus, for example. Controller 124 of manned material handling vehicle 120 can also include a communications interface for communicating via network 130. The communications interface can include a wireless interface such as a wireless radio used to communicate via Bluetooth^{®}, WiFi^{®}, cellular, and/or other wireless network protocols (e.g., through one or more gateways, wireless access points, etc.). The communications interface can also include different types of ports (e.g., USB, Ethernet, cellular, coaxial, fiber optic, etc.) for establishing connections to different networks and/or devices. Controller 124 can include one or more non-transitory computer-readable storage media having instructions stored thereon that, when executed by one or more processors of controller 124, cause controller 124 to implement operations according to the instructions. Manned material handling vehicle 120 can transmit a variety of reporting data including historical data and location data via network 130 to server 140 for various purposes. Advantageously, to handle requests for assistance associated with unmanned material handling vehicle 110, controller 124 of manned material handling vehicle 120 can be configured to communicate directly with controller 114 of unmanned material handling vehicle 110. That is, controller 114 can send a request for assistance directly to controller 124 (e.g., via various types of wireless communications protocols) without routing the request for assistance through an intermediary system, such as through server 140.

Manned material handling vehicle 120 is also shown to include a user interface 122 in FIG. 1. User interface 122 can be implemented in a variety of ways, including using a tablet-like device with a display (e.g., a touch screen display) and, in some examples, various push buttons and/or dials for providing inputs. User interface 122 can also be implemented using a virtual reality (VR) device such as a VR headset, or other types of similar virtual simulation devices including augmented reality (AR), mixed reality (MR), and extended reality (XR) devices. User interface 122 can be configured to notify the human operating manned material handling vehicle 120 of a request for assistance that is received from unmanned material handling vehicle 110. User interface 122 can also be used to receive inputs from the human operating manned material handling vehicle 120 related to requests for assistance received from unmanned material handling vehicle 110, and these inputs can be used to affect operation of unmanned material handling vehicle 110. User interface 122 can further include devices such as steering mechanisms (e.g., a wheel, joystick, etc.), accelerating and braking mechanisms (e.g., pedals), an interactive map of the facility, and the like.

Via user interface 122, a variety of different information associated with the request for assistance received from unmanned material handling vehicle 110 can be presented to the human operating manned material handling vehicle 120, including the nature of the assist and any relevant context the human may need related to the assist. One or more video feeds and/or images related to unmanned material handling vehicle 110 (e.g., as captured by one or more cameras on unmanned material handling vehicle 110) can be presented on user interface 122 to show the human the real time operational status and location of unmanned material handling vehicle 110, for example. In examples where manned material handling vehicle 120 is equipped with a VR headset, the human can view rich context regarding the status of unmanned material handling vehicle 110 in virtual reality via user interface 122. Different data such as location data, live sensor data, and historical data associated with unmanned material handling vehicle 110 can also be presented to the human operating manned material handling vehicle 120 via user interface 122. In implementations where user interface 122 includes a touch screen display, various advantages can be provided in terms of operational efficiencies by providing a simple, yet effective, mechanism for the human operating manned material handling vehicle 120 to provide confirmations for unmanned material handling vehicle 110 to proceed with different operations in situations where unmanned material handling vehicle 110 has moderate to low confidence.

A variety of inputs can be provided by the human operating manned material handling vehicle 120 via user interface 122, including changing an operational mode of unmanned material handling vehicle 110. Different parameters associated with the obstacle detection and/or navigation system of unmanned material handling vehicle 110 can also be changed based on the input provided by the human operating manned material handling vehicle 120 via user interface 122. For example, based on the input, parameters such as target speed, delay (amount of time required to elapse before changing speed), minimum obstacle size required to trigger the obstacle detection system, buffer (distance between obstacle that triggers a change in speed), field width (width of obstacle detection area), pivot angle, speed in steer (maximum speed at different turning angles), and other types of parameters used for autonomous operation of unmanned material handling vehicle 110. The inputs can also be used to guide unmanned material handling vehicle 110, for example by providing positional coordinates and/or steering and/or accelerating/braking unmanned material handling vehicle 110 via input to user interface 122. User interface 122 can be implemented at least in part using a tablet-like display, and the human operating manned material handling vehicle 120 can provide various inputs via a touch screen on the tablet-like display. For example, the human operating manned material handling vehicle 120 can simply tap the screen of the tablet-like display to confirm that unmanned material handling vehicle 110 has correctly identified the pockets on a pallet for inserting forks. Also, if unmanned material handling vehicle 110 struggles to identify the pockets on the pallet, but the human operating manned material handling vehicle 120 can clearly see the pockets on the tablet-like display (e.g., when viewing a video feed showing the operational environment of unmanned material handling vehicle 110), the human operating manned material handling vehicle 120 can use the controls on manned material handling vehicle 120 (e.g., after toggling manned material handling vehicle 120 and/or unmanned material handling vehicle 110 into remote assist mode) such as a multi-function handle and/or a steering tiller to properly position the forks (e.g., lift the forks, lower the forks, steer the vehicle) of unmanned material handling vehicle 110 and lift the pallet from a rack.

The operational mode of unmanned material handling vehicle 110 can be toggled between normal operating mode and a remote assist mode, for example. While in the remote assist mode, user interface 122 can then present various data associated with unmanned material handling vehicle 110. Also, while in remote assist mode, operator commands imparted on manned material handling vehicle 120 via user interface 122 and/or via the controls of manned material handling vehicle 120 can be manifested on unmanned material handling vehicle 110 via network 130. Once the human operator of manned material handling vehicle 120 completes the assist, normal operation of both unmanned material handling vehicle 110 and manned material handling vehicle 120 can resume. Inputs can be provided through user interface 122 in a variety of ways, including through physical push buttons and/or dials, interaction with a touch screen, voice commands, motion detection (e.g., when using a VR headset), and other types of inputs.

Network 130 can be implemented in a variety of ways, including using multiple separate networks variously interconnected to each other. In some implementations, network 130 can be a wireless network such as a WiFi^{®} network. Network 130 can include various types of hardware and software components for implementing wireless network functionality, such as gateways, access points, Ethernet cables, switches, and the like. Network 130 can also be a cellular network, a Bluetooth^{®} network, the Internet, and other types of suitable networks and/or combinations thereof. When unmanned material handling vehicle 110 encounters a situation navigating within the facility, unmanned material handling vehicle 110 can transmit an indication to manned material handling vehicle 120 via network 130.

Server 140 can be implemented in a variety of ways, including using multiple separate hardware computing components. For example, server 140 can be an on-premises server installed within the facility. Server 140 can be a remote, cloud-based server installed in a location remote to the facility such as a data center. Server 140 can also be a hybrid combination of one or more on-premises servers and one or more remote servers. Server 140 can be implemented using a variety of different types of hardware and software configurations, including using different types of processing devices including CPUs and/or graphics processing units (GPUs) and various types of memory (e.g., volatile, non-volatile, etc.). Server 140 can include one or more non-transitory computer-readable storage media having instructions stored thereon that, when executed by one or more processors of server 140, cause server 140 to implement operations according to the instructions. Server 140 can perform various functions for material handling equipment within the facility, including maintenance of historical and/or live data, and configuration of various operational parameters associated with material handling equipment within the facility. Server 140 can provide the components for hosting at least some of the software components of a warehouse management system, for example.

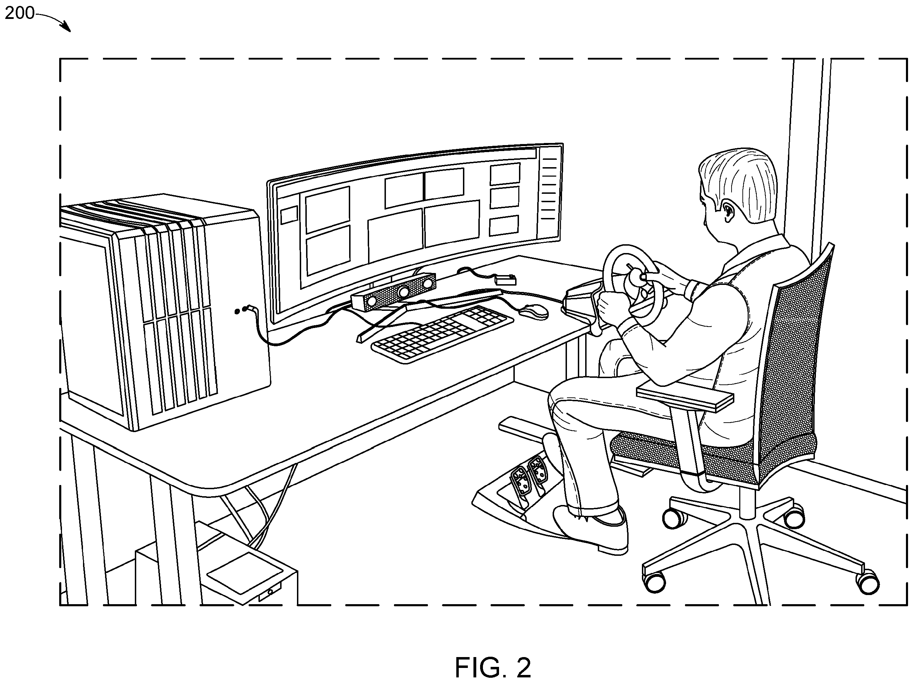

Referring to FIG. 2, an illustration of an example remote operator station 200 for operating material handling vehicles within a facility is shown. Remote operator station 200 represents an alternative to using a manned material handling vehicle (such as manned material handling vehicle 120) to assist autonomous material handling vehicles (such as unmanned material handling vehicle 110) with navigating through a facility. Remote operator station 200 allows a human to assist autonomous vehicles with navigation from a remote location. For data security and latency reasons, it may be advantageous to have the human controlling remote operator station 200 in the same facility as the material handling vehicles being controlled. Also, in facilities where only one or only a few autonomous material handling vehicles are operating, the human controlling remote operator station 200 can experience downtime when assistance isn't being provided. It may therefore be particularly advantageous to use manned material handling vehicles in place of such a remote operator station for efficiency purposes.

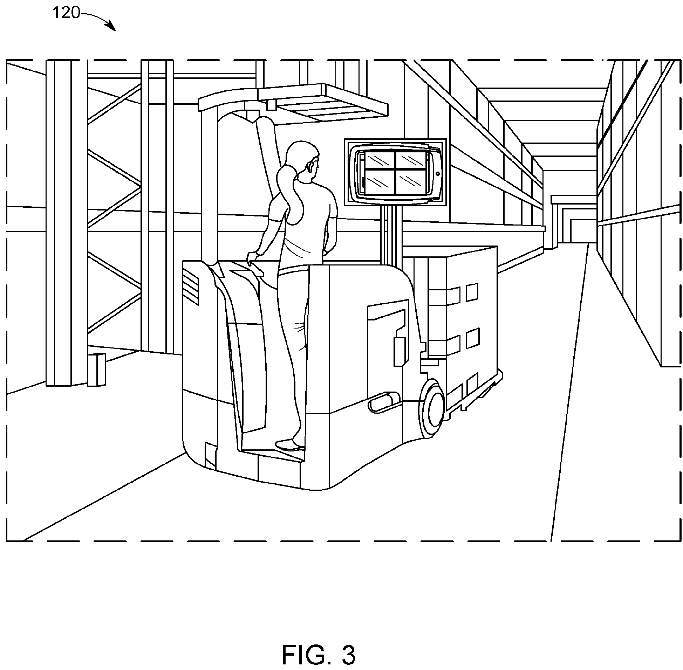

Referring to FIG. 3, an illustration of an example implementation of manned material handling vehicle 120 is shown. In the implementation of manned material handling vehicle 120 shown in FIG. 3, user interface 122 can include a tablet-like device with a display. The human operating manned material handling vehicle 120 can be notified of a request for assistance transmitted by unmanned material handling vehicle 110 via the display, and provide an input via the tablet-like device to toggle unmanned material handling vehicle 110 into remote assist mode. Once unmanned material handling vehicle 110 is in remote assist mode, a variety of data associated with unmanned material handling vehicle 110 can be presented to the human via the display. For example, one or more video feeds of unmanned material handling vehicle 110 (e.g., showing the current state of unmanned material handling vehicle 110) can be presented on the display. After viewing the video feeds and diagnosing the issue with unmanned material handling vehicle 110, the human can provide an input via the tablet-like device (among other types of possible inputs) to affect operation of the unmanned material handling vehicle 110 and complete the assist. Also, when unmanned material handling vehicle 110 enters the remote assist mode, an interlock can be triggered for manned material handling vehicle 120 while it is assisting unmanned material handling vehicle 110, such that manned material handling vehicle 120 cannot move until the assist is complete.

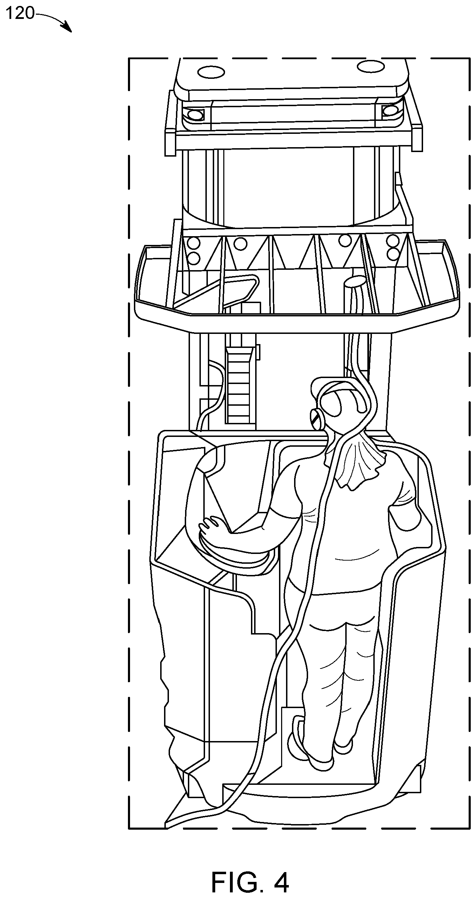

Referring to FIG. 4, an illustration of another example implementation of manned material handling vehicle 120 is shown. In the implementation of manned material handling vehicle 120 shown in FIG. 4, user interface 122 can include a VR headset. The human operating manned material handling vehicle 120 can be notified of a request for assistance transmitted by unmanned material handling vehicle 110 via some type of display or audio indication, for example, and can provide some type of input to toggle unmanned material handling vehicle 110 into remote assist mode. Once unmanned material handling vehicle 110 is in remote assist mode, a variety of data associated with unmanned material handling vehicle 110 can be presented to the human via the VR headset. The VR headset can provide a live rendering of the operating environment of unmanned material handling vehicle 110. After viewing the status of unmanned material handling vehicle 110 via the VR headset, the human can provide some type of input to affect operation of the unmanned material handling vehicle 110 and complete the assist.

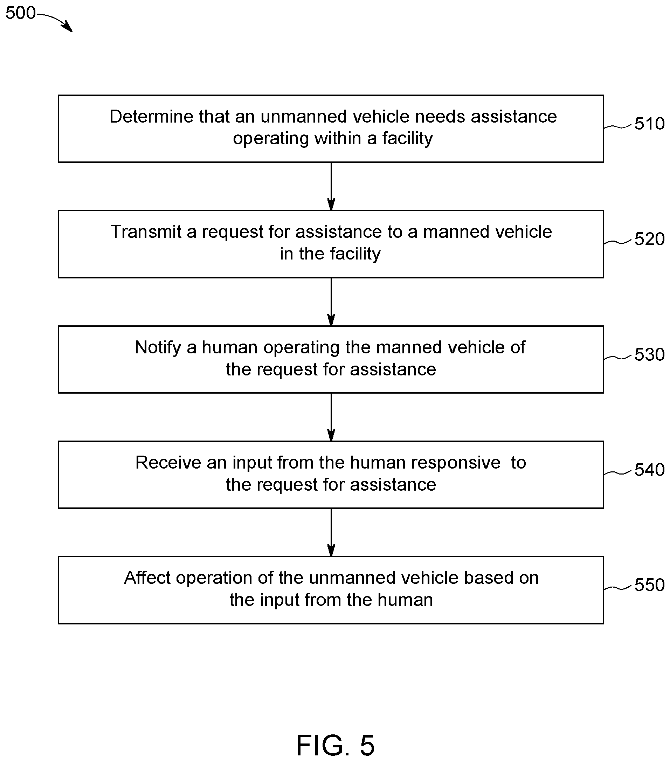

Referring to FIG. 5, a flowchart illustrating an example process 500 for operating material handling vehicles within a facility is shown. Process 500 can be performed by various components of example system 100 described above, for example. Process 500 can be used to assist unmanned material handling vehicle 110 in navigating within a facility using manned material handling vehicle 120. Process 500 can also be used to allow material handling vehicle customers to ease into shared autonomy by leveraging the human operators and material handling vehicles they already have without the need for remote operator station 200.

At step 510, process 500 is shown to include determining that an unmanned vehicle needs assistance operating within a facility. For example, unmanned material handling vehicle 110 can determine that it needs assistance based on a variety of different parameters determined by one or more sensors of unmanned material handling vehicle 110, such as lidar sensors, cameras, proximity sensors, vibration sensors, temperature sensors, pressure sensors, location sensors, weight sensors, and other suitable types of sensors. A variety of different types of operational difficulties can arise for unmanned material handling vehicle 110 depending on the application. Unmanned material handling vehicle 110 can encounter an unexpected object (e.g., a pallet on the floor) and may lack the sufficient logic to determine an alternate path around the unexpected object. Unmanned material handling vehicle 110 can also determine that it is unable to detect a pallet at a target location, and accordingly needs assistance to determine next steps. The determination in step 510 that unmanned material handling vehicle 110 needs assistance can also be made outside of material handling vehicle 110, for example by server 140 based on live and/or historical data associated with unmanned material handling vehicle 110.

At step 520, process 500 is shown to include transmitting a request for assistance to a manned vehicle in the facility. For example, unmanned material handling vehicle 110 can transmit a request for assistance (indication) to manned material handling vehicle 120. Unmanned material handling vehicle 110 can transmit the request for assistance to manned material handling vehicle 120 via network 130, for example. Unmanned material handling vehicle 120 can also transmit the request for assistance to more than one manned material handling vehicle, such as to all manned material handling vehicles in the facility within a certain class or distance, for example. For example, if an automated stand up counterbalanced forklift requires assistance, it can request assistance from all other manned stand up counterbalanced forklifts in the facility that are equipped with remote assist functionality.

At step 530, process 500 is shown to include notifying a human operating the manned vehicle of the request for assistance. For example, one or more circuits of manned material handling vehicle 120 can be configured to notify a human operating manned material handling vehicle 120 of the request for assistance received from unmanned material handling vehicle 110 via user interface 122. The human operating manned material handling vehicle 120 can be notified of the request for assistance received from unmanned material handling vehicle 110 in a variety of ways. For example, the request for assistance can be presented on a display and/or the request for assistance can be presented to the human operating manned material handling vehicle 120 via an audio indication, among other examples. In some examples, notifications are presented to multiple humans operating separate material handling vehicles that are each capable of assisting. The unmanned material handling vehicle 110 can perform the step of notifying the human operating manned material handling vehicle 120 of the request for assistance at step 530 in the sense that unmanned material handling vehicle 110 send the request for assistance to manned material handling vehicle 120 and thereby causes manned material handling vehicle 120 to notify the human operating manned material handling vehicle 120 of the request for assistance at step 530.

At step 540, process 500 is shown to include receiving an input from the human responsive to the request for assistance. For example, the human operating manned material handling vehicle 120 can provide an input via user interface 122 related to the control of the operation of unmanned material handling vehicle 110 within the facility. The input can be one or more of a variety of different types of inputs, such as discussed above. The input can be provided in a variety of ways, including through physical push buttons and/or dials, interaction with a touch screen interface, voice commands, motion detection (e.g., when using a VR headset), and other types of inputs. The input can include multiple different types and quantities of inputs provided while unmanned material handling vehicle 110 is operating in remote assist mode, for example to complete any functions sufficient for unmanned material handling vehicle 110 to return to normal autonomous operation without requiring any or minimal assistance.

At step 550, process 500 is shown to include affecting the operation of the unmanned vehicle based on the input from the human. For example, the operation of unmanned material handling vehicle 110 within the facility can be affected based on the input provided to user interface 122 by the human operating manned material handling vehicle 120. The operation of unmanned material handling vehicle 110 can be affected by toggling the operating mode of unmanned material handling vehicle 110 from a normal operating mode to a remote assist mode, for example. The input can also adjust one or more parameters associated with autonomous operation of unmanned material handling vehicle 110, including changing parameters such as target speed, delay, minimum obstacle size, buffer, field width, pivot angle, and speed in steer. The input can also be used to guide unmanned material handling vehicle 110 within the facility, for example by providing positional coordinates and steering and/or accelerating/braking unmanned material handling vehicle 110 via input to user interface 122. The input can guide unmanned material handling vehicle 110 in a variety of ways, including guiding operations such as lifting, tilting, reaching, retracting, side shifting, traveling, asserting a horn, steering, for example, among other operations.

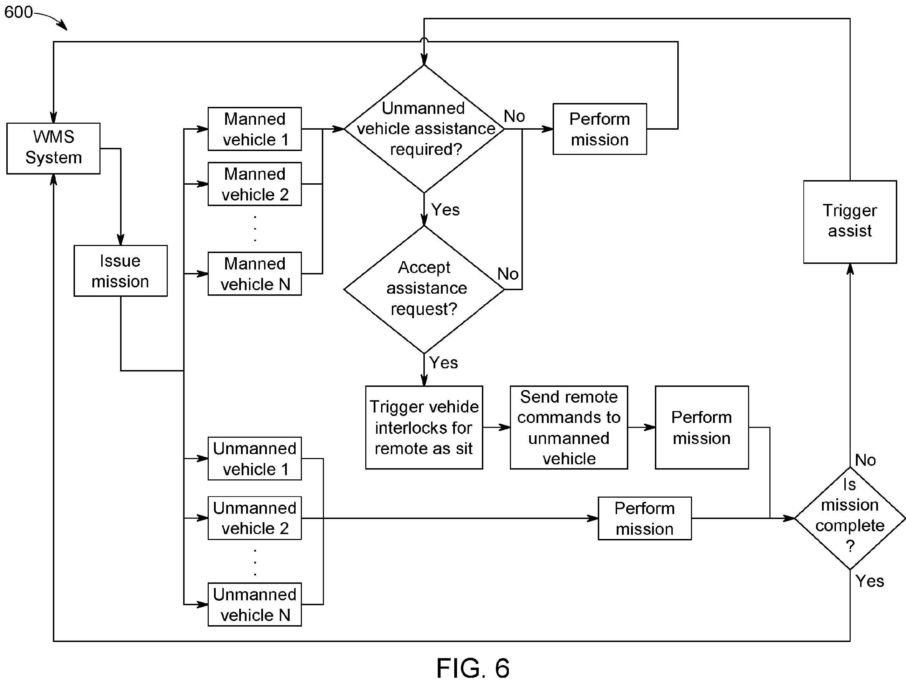

Referring to FIG. 6, a flowchart illustrating another example process 600 for operating material handling vehicles within a facility is shown. Process 600 can be performed by various components of example system 100 described above, for example. Process 600 provides an example of the high-level logic that can be executed by systems such as system 100 for assisting autonomously operated material handling vehicles within a facility. Process 600 is generally performed by a warehouse management system connected to at least one unmanned material handling vehicle (e.g., unmanned material handling vehicle 110) and at least one manned material handling vehicle (e.g., manned material handling vehicle 120).

As shown in FIG. 6, process 600 can begin with the warehouse management system issuing a mission to be executed by the at least one unmanned material handling vehicle and/or the at least one manned material handling vehicle. The mission can include one or more tasks, such as moving pallets of goods within a facility such as a warehouse. While the unmanned material handling vehicle does not require assistance to perform the mission, it can operate on its own without any assistance from any manned material handling vehicles. However, if the unmanned material handling vehicle does require assistance to perform the mission, it can transmit a request for assistance as described above, and the request for assistance can be accepted by a manned material handling vehicle, for example via user interface 122. After the request for assistance is accepted, the manned material handling vehicle that handles the assist can be interlocked such that it is unable to move during completion of the assist. Then, remote commands can be sent to the unmanned material handling vehicle from the manned material handling vehicle, and the unmanned material handling vehicle can continue performing the mission based on the remote commands received from the manned material handling vehicle. Once the mission is complete, the warehouse management system can issue a new mission. However, if the mission is not complete (e.g., after a predetermined time period elapses after sending the remote commands), one or more further remote assists can be triggered by the unmanned material handling vehicle.

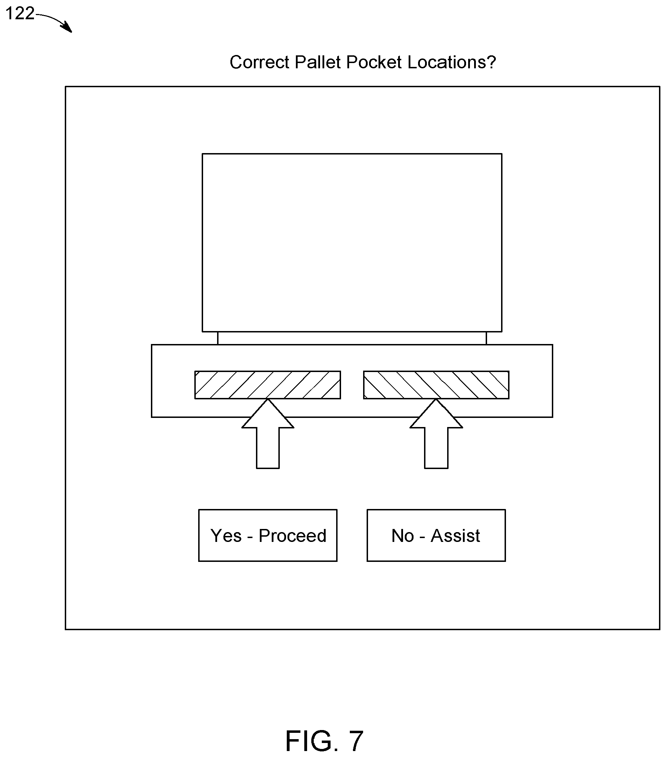

Referring to FIG. 7, an illustration of an example remote assist that can be performed for unmanned material handling vehicle 110 via user interface 122 is shown. As noted, user interface 122 can be presented to a human operating manned material handling vehicle 120 based on the request for assistance transmitted by unmanned material handling vehicle 110. As shown in FIG. 7, the request for assistance involves unmanned material handling vehicle 110 seeking confirmation that it has identified the correct locations for pallet pockets on a pallet in a facility. Via user interface 122, the human operating manned material handling vehicle 120 can either confirm that the identified locations of the pallet pockets are correct, or can indicate that the identified locations of the pallet pockets are incorrect and initiate a remote assist. For example, the human operating manned material handling vehicle 120 can provide an input via a touch screen interface selecting either "Yes - Proceed" or "No - Assist" as shown in FIG. 7. If the human operating manned material handling vehicle 120 does initiate a remote assist, the human operating manned material handling vehicle 120 can complete the remote assist in a variety of ways, such as by providing one or more additional inputs via user interface 122 (e.g., to move the arrows as shown in FIG. 7) to the correct locations of the pallet pockets.

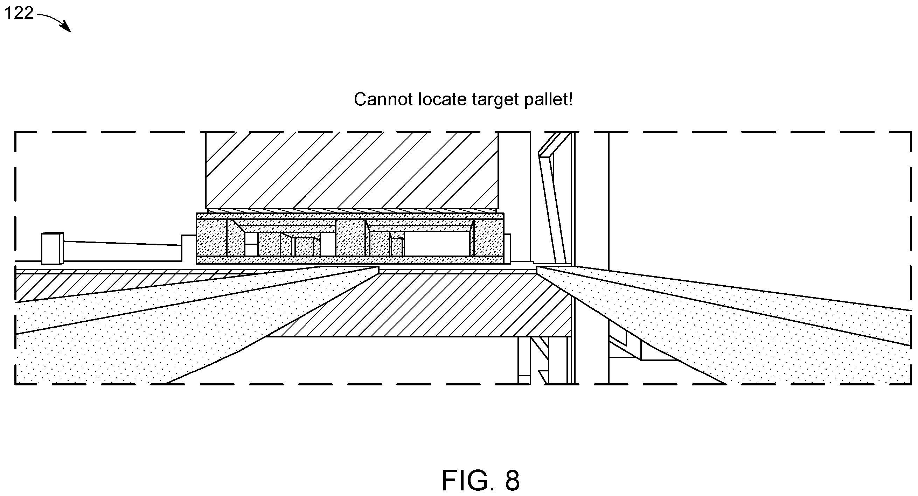

Referring to FIG. 8, another illustration of another example remote assist that can be performed for unmanned material handling vehicle 110 via user interface 122 is shown. As noted, user interface 122 can be presented to a human operating manned material handling vehicle 120 based on the request for assistance transmitted by unmanned material handling vehicle 110. As shown in FIG. 8, the request for assistance again involves unmanned material handling vehicle 110 seeking to identify the correct locations for pallet pockets on a pallet in a facility. However, in this example, unmanned material handling vehicle 110 cannot generate a prediction for where the pallet pockets are located and accordingly provides an error message indicating that it cannot locate the target pallet. In this example, the human operating manned material handling vehicle 120 can initiate and complete a remote assist in a variety of ways, such as by providing various types of inputs via user interface 122 indicating the location of the target pallet. For example, the human operating manned material handling vehicle 120 can provide one or more inputs via a touch screen interface indicating the correct locations of the pallet pockets, and/or the human operating manned material handling vehicle 120 can use the multi-function handle and/or the steering tiller of manned material handling vehicle 120 to position the forks of unmanned material handling vehicle 110 at the pallet pockets.

For certain types of vehicles there are training requirements imposed by various government agencies, laws, rules, and regulations. For example, OSHA imposes a duty on employers to train and supervise operators of various types of material handling vehicles. Recertification every three years is also required. In certain instances, refresher training in relevant topics shall be provided to the operator when required. In all instances, the operator remains in control of the material handling vehicle during performance of any actions. Further, a warehouse manager remains in control of the fleet of material handling vehicles within the warehouse environment. The training of operators and supervision to be provided by warehouse managers requires among other things proper operational practices including among other things that an operator remain in control of the material handling vehicle, pay attention to the operating environment, and always look in the direction of travel.

While various spatial and directional terms, such as top, bottom, lower, mid, lateral, horizontal, vertical, front, and the like may be used to describe examples of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

## Claims

1. A material handling vehicle (120), comprising:
a user interface (122) for presenting data to a human that operates the material handling vehicle and for receiving inputs from the human that operates the material handling vehicle; and
**characterized in that**
the material handling vehicle (120) further comprises:
a controller (124) comprising circuitry configured to:
receive a request for assistance transmitted from a second material handling vehicle (110) to the material handling vehicle (120) directly via a wireless network (130), wherein the second material handling vehicle (110) is to be operated autonomously;
notify the human of the request for assistance received from the second material handling vehicle (110) via the user interface (122);
receive an input from the human responsive to the request for assistance received from the second material handling vehicle (110) via the user interface (122); and
communicate with the second material handling vehicle (110) via the wireless network to affect operation of the second material handling vehicle (110) in accordance with the input.

2. The material handling vehicle (120) of claim 1, wherein the user interface (122) comprises a virtual reality headset, and wherein the controller (124) is further configured to present a live rendering of an operational environment of the second material handling vehicle (110) to the human via the virtual reality headset.

3. The material handling vehicle (120) of claim 1 or 2, wherein the controller (124) is configured to affect the operation of the second material handling vehicle by changing an operating mode of the second material handling vehicle (110) from a first operating mode to a second operating mode such that the second material handling vehicle (110) operates in accordance with the second operating mode.

4. The material handling vehicle (120) of claim 3, wherein:
the first operating mode is a normal operating mode and the second operating mode is a remote assist mode; and
the controller (124) is configured to present a live video feed of the second material handling vehicle (110) to the human via the user interface (122) responsive to changing the operating mode of the second material handling vehicle (110) to the remote assist mode.

5. The material handling vehicle (120) of any of the claims above, wherein the user interface (122) comprises a touch screen interface and the controller (124) is configured to receive the input from the human via the touch screen interface.

6. The material handling vehicle (120) of any of the claims above, wherein the user interface (122) comprises a display, and wherein the controller (124) is further configured to present a live video feed of the second material handling vehicle (110) to the human via the display.

7. The material handling vehicle (120) of any of the claims above, wherein the controller (124) is configured to affect the operation of the second material handling vehicle (110) by steering or guiding the second material handling vehicle (110).

8. The material handling vehicle (120) of any of the claims above, wherein the controller (124) is configured to affect the operation of the second material handling vehicle (110) by changing a parameter of an obstacle detection system of the second material handling vehicle (110).

9. A method (500) for operating material handling vehicles,
**characterized in that**
the method (500) comprises:
receiving, by a controller (124) on a first material handling vehicle (120), a request for assistance from a second material handling vehicle (110) directly via a wireless network (130), wherein the second material handling vehicle (110) is to be operated autonomously;
notifying a human operating the first material handling vehicle (120)of the request for assistance received from the second material handling vehicle (110) via a user interface (122) on the first material handling vehicle (120), the user interface (122) for presenting data to the human that operated the first material handling vehicle (120) and for receiving inputs from the human that operates the first material handling vehicle (120);
receiving an input from the human responsive to the request for assistance received from the second material handling vehicle (110) via the user interface (122); and
communicating with the second material handling vehicle(110) to affect operation of the second material handling vehicle (110) in accordance with the input.

10. The method (500) of claim 9, wherein communicating with the second material handling vehicle (110) to affect the operation of the second material handling vehicle (110) comprises changing a parameter of an obstacle detection system of the second material handling vehicle (110).

11. The method (500) of claim 9 or 10, further comprising presenting a live rendering of an operational environment of the second material handling vehicle (110) to the human via the user interface (122), wherein the user interface (122) comprises a virtual reality headset.

12. The method (500) of any of the claims 9 to 11, wherein communicating with the second material handling vehicle (110) to affect the operation of the second material handling vehicle (110) comprises changing an operating mode of the second material handling vehicle (110) from a first operating mode to a second operating mode such that the second material handling vehicle (110) operates in accordance with the second operating mode.

13. The method (500) of any of the claims 9 to 12, wherein the user interface (122) comprises a touch screen display, and wherein receiving the input from the human comprises receiving the input from the human via the touch screen display.

14. The method (500) of any of the claims 9 to 13, wherein communicating with the second material handling vehicle (110) to affect the operation of the second material handling vehicle (110) comprises guiding the second material handling vehicle (110).

15. The method (500) of claim 14, wherein guiding the second material handling vehicle (110) comprises confirming that forks of the second material handling vehicle (110) are aligned with pockets on a pallet.

## Patentansprüche

1. Materialhandhabungsfahrzeug (120), umfassend:
eine Benutzerschnittstelle (122) zum Darstellen von Daten für einen Menschen, der das Materialhandhabungsfahrzeug betreibt, und zum Empfangen von Eingaben von dem Menschen, der das Materialhandhabungsfahrzeug betreibt; und
**dadurch gekennzeichnet, dass**
das Materialhandhabungsfahrzeug (120) ferner Folgendes umfasst:
eine Steuerung (124), die eine Schaltung umfasst, die zu Folgendem konfiguriert ist:
Empfangen einer Anforderung von Unterstützung, die von einem zweiten Materialhandhabungsfahrzeug (110) direkt über ein drahtloses Netzwerk (130) an das Materialhandhabungsfahrzeug (120) übertragen wird, wobei das zweite Materialhandhabungsfahrzeug (110) autonom zu betreiben ist;
Benachrichtigen des Menschen über die Anforderung von Unterstützung, die von dem zweiten Materialhandhabungsfahrzeug (110) über die Benutzerschnittstelle (122) empfangen wurde;
Empfangen einer Eingabe von dem Menschen als Reaktion auf die Anforderung von Unterstützung, die von dem zweiten Materialhandhabungsfahrzeug (110) über die Benutzerschnittstelle (122) empfangen wurde; und
Kommunizieren mit dem zweiten Materialhandhabungsfahrzeug (110) über das drahtlose Netzwerk, um einen Betrieb des zweiten Materialhandhabungsfahrzeugs (110) gemäß der Eingabe zu beeinflussen.

2. Materialhandhabungsfahrzeug (120) nach Anspruch 1, wobei die Benutzerschnittstelle (122) ein Virtual-Reality-Headset umfasst und wobei die Steuerung (124) ferner dazu konfiguriert ist, dem Menschen eine Live-Wiedergabe einer Betriebsumgebung des zweiten Materialhandhabungsfahrzeugs (110) über das Virtual-Reality-Headset darzustellen.

3. Materialhandhabungsfahrzeug (120) nach Anspruch 1 oder 2, wobei die Steuerung (124) dazu konfiguriert ist, den Betrieb des zweiten Materialhandhabungsfahrzeugs durch Ändern eines Betriebsmodus des zweiten Materialhandhabungsfahrzeugs (110) von einem ersten Betriebsmodus in einen zweiten Betriebsmodus derart zu beeinflussen, dass das zweite Materialhandhabungsfahrzeug (110) gemäß dem zweiten Betriebsmodus betrieben wird.

4. Materialhandhabungsfahrzeug (120) nach Anspruch 3, wobei:
der erste Betriebsmodus ein normaler Betriebsmodus ist und der zweite Betriebsmodus ein Fernunterstützungsmodus ist; und
die Steuerung (124) dazu konfiguriert ist, als Reaktion auf das Ändern des Betriebsmodus des zweiten Materialhandhabungsfahrzeugs (110) in den Fernunterstützungsmodus dem Menschen einen Live-Videofeed des zweiten Materialhandhabungsfahrzeugs (110) über die Benutzerschnittstelle (122) darzustellen.

5. Materialhandhabungsfahrzeug (120) nach einem der vorhergehenden Ansprüche, wobei die Benutzerschnittstelle (122) eine Berührbildschirmschnittstelle umfasst und die Steuerung (124) dazu konfiguriert ist, die Eingabe von dem Menschen über die Berührbildschirmschnittstelle zu empfangen.

6. Materialhandhabungsfahrzeug (120) nach einem der vorhergehenden Ansprüche, wobei die Benutzerschnittstelle (122) eine Anzeige umfasst und wobei die Steuerung (124) ferner dazu konfiguriert ist, dem Menschen einen Live-Videofeed des zweiten Materialhandhabungsfahrzeugs (110) über die Anzeige darzustellen.

7. Materialhandhabungsfahrzeug (120) nach einem der vorhergehenden Ansprüche, wobei die Steuerung (124) dazu konfiguriert ist, den Betrieb des zweiten Materialhandhabungsfahrzeugs (110) durch Steuern oder Führen des zweiten Materialhandhabungsfahrzeugs (110) zu beeinflussen.

8. Materialhandhabungsfahrzeug (120) nach einem der vorhergehenden Ansprüche, wobei die Steuerung (124) dazu konfiguriert ist, den Betrieb des zweiten Materialhandhabungsfahrzeugs (110) durch Ändern eines Parameters eines Hindernisdetektionssystems des zweiten Materialhandhabungsfahrzeugs (110) zu beeinflussen.

9. Verfahren (500) zum Betreiben von Materialhandhabungsfahrzeugen,
**dadurch gekennzeichnet, dass**
das Verfahren (500) Folgendes umfasst:
Empfangen, durch eine Steuerung (124) an einem ersten Materialhandhabungsfahrzeug (120), einer Anforderung von Unterstützung von einem zweiten Materialhandhabungsfahrzeug (110) direkt über ein drahtloses Netzwerk (130), wobei das zweite Materialhandhabungsfahrzeug (110) autonom zu betreiben ist;
Benachrichtigen eines Menschen, der das erste Materialhandhabungsfahrzeug (120)betreibt, über die Anforderung von Unterstützung, die von dem zweiten Materialhandhabungsfahrzeug (110) über eine Benutzerschnittstelle (122) an dem ersten Materialhandhabungsfahrzeug (120) empfangen wurde, wobei die Benutzerschnittstelle (122) zum Darstellen von Daten für den Menschen, der das erste Materialhandhabungsfahrzeug (120) betreibt, und zum Empfangen von Eingaben von dem Menschen, der das erste Materialhandhabungsfahrzeug (120) betreibt;
Empfangen einer Eingabe von dem Menschen als Reaktion auf die Anforderung von Unterstützung, die von dem zweiten Materialhandhabungsfahrzeug (110) über die Benutzerschnittstelle (122) empfangen wurde; und
Kommunizieren mit dem zweiten Materialhandhabungsfahrzeug(110) um einen Betrieb des zweiten Materialhandhabungsfahrzeugs (110) gemäß der Eingabe zu beeinflussen.

10. Verfahren (500) nach Anspruch 9, wobei das Kommunizieren mit dem zweiten Materialhandhabungsfahrzeug (110), um den Betrieb des zweiten Materialhandhabungsfahrzeugs (110) zu beeinflussen, Ändern eines Parameters eines Hindernisdetektionssystems des zweiten Materialhandhabungsfahrzeugs (110) umfasst.

11. Verfahren (500) nach Anspruch 9 oder 10, ferner umfassend Darstellen einer Live-Wiedergabe einer Betriebsumgebung des zweiten Materialhandhabungsfahrzeugs (110) für den Menschen über die Benutzerschnittstelle (122), wobei die Benutzerschnittstelle (122) ein Virtual-Reality-Headset umfasst.

12. Verfahren (500) nach einem der Ansprüche 9 bis 11, wobei das Kommunizieren mit dem zweiten Materialhandhabungsfahrzeug (110), um den Betrieb des zweiten Materialhandhabungsfahrzeugs (110) zu beeinflussen, Ändern eines Betriebsmodus des zweiten Materialhandhabungsfahrzeugs (110) von einem ersten Betriebsmodus in einen zweiten Betriebsmodus derart umfasst, dass das zweite Materialhandhabungsfahrzeug (110) gemäß dem zweiten Betriebsmodus betrieben wird.

13. Verfahren (500) nach einem der Ansprüche 9 bis 12, wobei die Benutzerschnittstelle (122) eine Berührbildschirmanzeige umfasst und wobei das Empfangen der Eingabe von dem Menschen Empfangen der Eingabe von dem Menschen über die Berührbildschirmanzeige umfasst.

14. Verfahren (500) nach einem der Ansprüche 9 bis 13, wobei das Kommunizieren mit dem zweiten Materialhandhabungsfahrzeug (110), um den Betrieb des zweiten Materialhandhabungsfahrzeugs (110) zu beeinflussen, Führen des zweiten Materialhandhabungsfahrzeugs (110) umfasst.

15. Verfahren (500) nach Anspruch 14, wobei das Führen des zweiten Materialhandhabungsfahrzeugs (110) Bestätigen, dass Gabeln des zweiten Materialhandhabungsfahrzeugs (110) mit Öffnungen an einer Palette ausgerichtet sind, umfasst.

## Revendications

1. Véhicule de manipulation de matériau (120), comprenant :
une interface utilisateur (122) pour présenter des données à un humain qui fait fonctionner le véhicule de manipulation de matériau et pour recevoir des entrées provenant de l'humain qui fait fonctionner le véhicule de manipulation de matériau ; et
**caractérisé en ce que**
le véhicule de manipulation de matériau (120) comprend en outre :
un dispositif de commande (124) comprenant une circuiterie configurée pour :
recevoir une demande d'assistance transmise provenant d'un second véhicule de manipulation de matériau (110) au véhicule de manipulation de matériau (120) directement via un réseau sans fil (130), dans lequel le second véhicule de manipulation de matériau (110) doit être utilisé de manière autonome ;
notifier à l'humain la demande d'assistance reçue provenant du second véhicule de manipulation de matériau (110) via l'interface utilisateur (122) ;
recevoir une entrée provenant de l'humain en réponse à la demande d'assistance reçue provenant du second véhicule de manipulation de matériau (110) via l'interface utilisateur (122) ; et
communiquer avec le second véhicule de manipulation de matériau (110) via le réseau sans fil pour influer sur le fonctionnement du second véhicule de manipulation de matériau (110) conformément à l'entrée.

2. Véhicule de manipulation de matériau (120) selon la revendication 1, dans lequel l'interface utilisateur (122) comprend un casque de réalité virtuelle, et dans lequel le dispositif de commande (124) est en outre configuré pour présenter un rendu en direct d'un environnement opérationnel du second véhicule de manipulation de matériau (110) à l'humain via le casque de réalité virtuelle.

3. Véhicule de manipulation de matériau (120) selon la revendication 1 ou 2, dans lequel le dispositif de commande (124) est configuré pour influer sur le fonctionnement du second véhicule de manipulation de matériau en changeant un mode de fonctionnement du second véhicule de manipulation de matériau (110) à partir d'un premier mode de fonctionnement vers un second mode de fonctionnement de telle sorte que le second véhicule de manipulation de matériau (110) fonctionne conformément au second mode de fonctionnement.

4. Véhicule de manipulation de matériau (120) selon la revendication 3, dans lequel :
le premier mode de fonctionnement est un mode de fonctionnement normal et le second mode de fonctionnement est un mode d'assistance à distance ; et
le dispositif de commande (124) est configuré pour présenter un flux vidéo en direct du second véhicule de manipulation de matériau (110) à l'humain via l'interface utilisateur (122) en réponse au changement du mode de fonctionnement du second véhicule de manipulation de matériau (110) vers le mode d'assistance à distance.

5. Véhicule de manipulation de matériau (120) selon l'une quelconque des revendications précédentes, dans lequel l'interface utilisateur (122) comprend une interface à écran tactile et le dispositif de commande (124) est configuré pour recevoir l'entrée provenant de l'humain via l'interface à écran tactile.

6. Véhicule de manipulation de matériau (120) selon l'une quelconque des revendications précédentes, dans lequel l'interface utilisateur (122) comprend un affichage, et dans lequel le dispositif de commande (124) est en outre configuré pour présenter un flux vidéo en direct du second véhicule de manipulation de matériau (110) à l'humain via l'affichage.

7. Véhicule de manipulation de matériau (120) selon l'une quelconque des revendications précédentes, dans lequel le dispositif de commande (124) est configuré pour influer sur le fonctionnement du second véhicule de manipulation de matériau (110) en dirigeant ou en guidant le second véhicule de manipulation de matériau (110).

8. Véhicule de manipulation de matériau (120) selon l'une quelconque des revendications précédentes, dans lequel le dispositif de commande (124) est configuré pour influer sur le fonctionnement du second véhicule de manipulation de matériau (110) en changeant un paramètre d'un système de détection d'obstacles du second véhicule de manipulation de matériau (110).

9. Procédé (500) pour faire fonctionner des véhicules de manipulation de matériau,
**caractérisé en ce que**
le procédé (500) comprend :
la réception, par un dispositif de commande (124) sur un premier véhicule de manipulation de matériau (120), d'une demande d'assistance provenant d'un second véhicule de manipulation de matériau (110) directement via un réseau sans fil (130), dans lequel le second véhicule de manipulation de matériau (110) doit être utilisé de manière autonome ;
la notification à un humain faisant fonctionner le premier véhicule de manipulation de matériau (120) de la demande d'assistance reçue provenant du second véhicule de manipulation de matériau (110) via une interface utilisateur (122) sur le premier véhicule de manipulation de matériau (120), l'interface utilisateur (122) étant destinée à présenter des données à l'humain qui fait fonctionner le premier véhicule de manipulation de matériau (120) et à recevoir des entrées provenant de l'humain qui fait fonctionner le premier véhicule de manipulation de matériau (120) ;
la réception d'une entrée provenant de l'humain en réponse à la demande d'assistance reçue provenant du second véhicule de manipulation de matériau (110) via l'interface utilisateur (122) ; et
la communication avec le second véhicule de manipulation de matériau (110) pour influer sur le fonctionnement du second véhicule de manipulation de matériau (110) conformément à l'entrée.

10. Procédé (500) selon la revendication 9, dans lequel la communication avec le second véhicule de manipulation de matériau (110) pour influer sur le fonctionnement du second véhicule de manipulation de matériau (110) comprend le changement d'un paramètre d'un système de détection d'obstacles du second véhicule de manipulation de matériau (110).

11. Procédé (500) selon la revendication 9 ou 10, comprenant en outre la présentation d'un rendu en direct d'un environnement opérationnel du second véhicule de manipulation de matériau (110) à l'humain via l'interface utilisateur (122), dans lequel l'interface utilisateur (122) comprises un casque de réalité virtuelle.

12. Procédé (500) selon l'une quelconque des revendications 9 à 11, dans lequel la communication avec le second véhicule de manipulation de matériau (110) pour influer sur le fonctionnement du second véhicule de manipulation de matériau (110) comprend le changement d'un mode de fonctionnement du second véhicule de manipulation de matériau (110) à partir d'un premier mode de fonctionnement vers un second mode de fonctionnement de telle sorte que le second véhicule de manipulation de matériau (110) fonctionne conformément au second mode de fonctionnement.

13. Procédé (500) selon l'une quelconque des revendications 9 à 12, dans lequel l'interface utilisateur (122) comprend un affichage à écran tactile, et dans lequel la réception de l'entrée provenant de l'humain comprend la réception de l'entrée provenant de l'humain via l'affichage à écran tactile.

14. Procédé (500) selon l'une quelconque des revendications 9 à 13, dans lequel la communication avec le second véhicule de manipulation de matériau (110) pour influer sur le fonctionnement du second véhicule de manipulation de matériau (110) comprend le guidage du second véhicule de manipulation de matériau (110).

15. Procédé (500) selon la revendication 14, dans lequel le guidage du second véhicule de manipulation de matériau (110) comprend la confirmation que des fourches du second véhicule de manipulation de matériau (110) sont alignées avec des ouvertures sur une palette.
